# EUROPEAN PATENT SPECIFICATION

(11) **EP 0 492 415 B1**
(45) Date of publication and mention of the grant of the patent: **24.04.1996**
(21) Application number: 91121739.6
(22) Date of filing: 18.12.1991
(51) Int. Cl.: H04N 5/60

(54) **Apparatus for selecting PCM or FM output of nicam decoder**
Vorrichtung zur Auswahl eines PCM- oder FM-Ausgangs von einem Nicam-Decoder
Circuit de sélection d'un signal de sortie PCM ou FM d'un décodeur Nicam

(30) Priority: 21.12.1990 KR 2135390
(43) Date of publication of application: 01.07.1992
(73) Proprietor: SAMSUNG ELECTRONICS CO., LTD., Suwon-City, Kyounggi-Do 441-370 (KR)
(72) Inventor: Na, Il-Ku, Ahnyang-city Kyounggi-do (KR)
(74) Representative: Grünecker, Kinkeldey, Stockmair & Schwanhäusser Anwaltssozietät

(56) References cited:
- EP-A- 0 374 433
- IEEE 1989 INTERNATIONAL CONFERENCE ON CONSUMER ELECTRONICS, JUNE 6-9, 1989, PAGES 77-78, NEW YORK, USA. SEAN REDMOND: "A TWO-CHIP SYSTEM FOR NICAM 728 MULTICHANNEL SOUND IN TV SETS"

## Description

### TECHNICAL BACKGROUND

The present invention concerns an apparatus for automatically selecting the pulse code modulation or frequency modulation mode (PCM/FM mode) of a receiver of the broadcast signals of a near instantaneously commanded audio multiplexer (NICAM).

Generally, the NICAM is employed for multiplex broadcasting system in European countries such as England, Scandinavia, etc., which makes it possible to transmit frequency modulated (FM) audio signals together with pulse code modulated (PCM) audio signals. In this case, the user may select by using a receiver of the NICAM broadcasting one of the FM and PCM audio signals that is more preferable than the other.

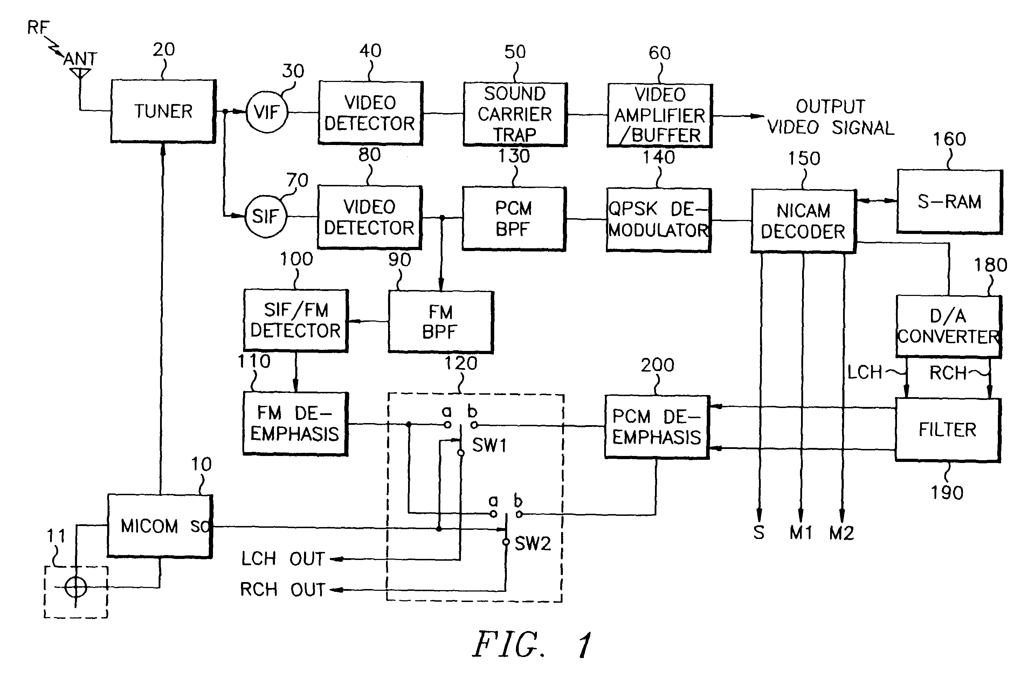

Referring to Fig. 1 for illustrating a conventional receiver of the NICAM broadcasting in block diagram, a microcomputer 10 provides phase locked loop (PLL) data to a tuner 20 in response to a signal produced by a channel key of a key matrix operated by the user. Hence, the NICAM radio frequency (RF) signals tuned by the PLL data are inputted through an antenna ANT to the tuner 20 whose output is transferred through a video intermediate frequency surface acoustic wave filter (VIF SAW filter) 30 and sound intermediate frequency surface acoustic filter (SIF SAW filter) 70 respectively to video detectors 40 and 80.

The output of the video detector 40 is inputted through a sound carrier trap 50 to a video amplifier/buffer 60, whose output is the RF video signal.

Meanwhile, the output of the video detector 80 is inputted to a FM BPF (band pass filter) 90 and PCM BPF 130. A SIF/FM detector 100 detects the output of the FM BPF 90 producing the FM audio signal loaded on the FM carrier applied to an FM deemphasis 110, whose output is applied to terminals (a) of a output selection means 120. In addition, the output of the PCM BPF 130 is demodulated by a QPSK demodulator 140 applied to a NICAM decoder 150.

The NICAM decoder 150 connected to a S-RAM 160 decodes the PCM coded audio signals to produce signals recognizing the state of the present broadcasting through recognizing terminals S,M1,M2. Also the decoded signals are applied to a digital/analog (D/A) converter 180.

The outputs of the D/A analog converter 180 are produced as PCM R channel (RCH) audio signal and PCM L channel (LCH) signal that are filtered through a filter 190 applied through a PCM deemphasis 200 to terminals (b) of the output selection means 120. Thus if the first and second switches SW1 and SW2 of the output selection means 120 contact the terminals (a), the L and R channel outputs are the FM audio signals, while if they contact the terminals (b), the L and R channel outputs are the PCM audio signals.

Conventionally, this function of the switches SW1 and SW2 is achieved only by the user manually operating the FM/PCM mode selection key of the key matrix 11 to cause the microcomputer 10 to produce the switch control signal through the selection output SO.

However, it is very discomforting for the user to manually switch the receiver of the NICAM broadcasting to the FM or PCM mode. For example, if the PCM audio signal generates errors, and therefore the FM audio signal must be received, or if the broadcasting is unexpectedly changed from a music program to a more general program, the user should necessarily switches the mode selection key. Consequently, the user of the conventional receiver of the NICAM broadcasting must manually switch the FM/PCM mode selection key in order to properly receive corresponding broadcasted signals.

This disadvantage is overcome by a prior art sytem (EP-A-0 374 433) for automatically selecting the PCM/FM mode of a receiver of the broadcast signals of a NICAM according to the broadcasting state.

It is an object of the invention to provide a system which allows automatic and manual selection as well in a simplified arrangement.

This object is solved by the features of claim 1.

The present invention will now be described more specifically with reference to the drawings attached only by way of example.

### BRIEF DESCRIPTION OF THE ATTACHED DRAWINGS

Fig. 1 is a block diagram for illustrating a conventional receiver of the broadcast signals of NICAM;
Fig. 2 is a block diagram for illustrating a receiver of the broadcast signals of NICAM according to the present invention; and
Fig. 3 is a flow chart of controlling the inventive receiver shown in Fig. 2.

### DETAILED DESCRIPTION OF A CERTAIN PREFERRED EMBODIMENT

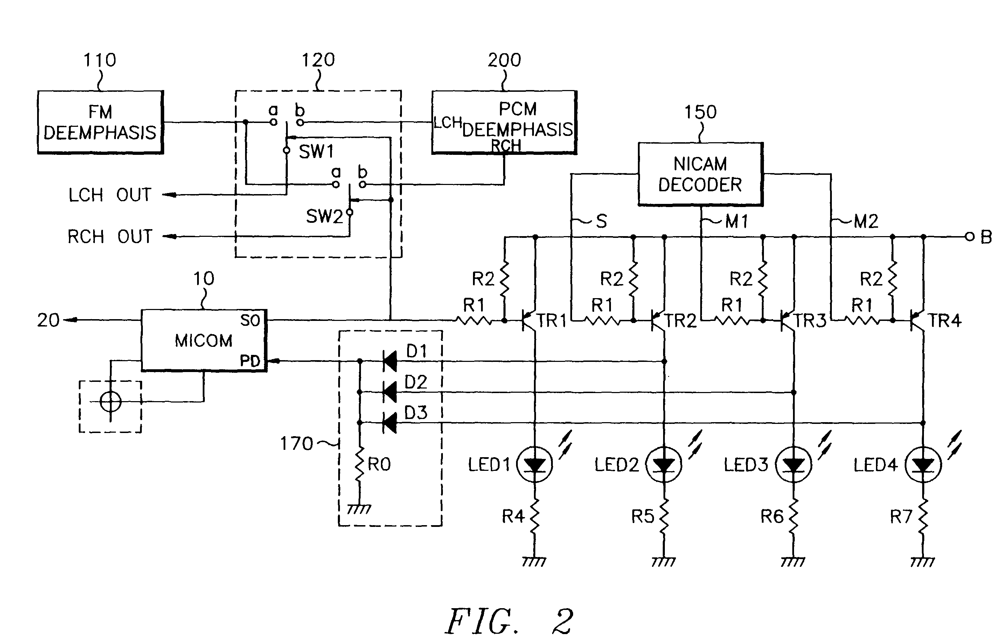

Referring to Fig. 2, there is shown a drive means for driving the apparatus according to the broadcast mode signals produced from a NICAM decoder 150. A broadcast mode display means is to display the receiving of the NICAM broadcast signals through the drive means. An OR gate 170 is connected to the drive means for providing a logic signal. An output selection means 120 is to switch the receiver to the PCM or FM mode. A microcomputer 10 generates control signals to automatically control the output selection means to the PCM or FM mode in response to the output of the OR gate 170, and to manually control the output selection means in response to the signals of a key matrix 11. A PCM/FM mode display means display the receiving mode of the receiver in response to the control signals of the microcomputer 10.

The drive means comprises a plurality of first resistors R1, a plurality of transistors TR2-TR4, and a plurality of second resistors R2.

The first resistors R1 respectively are connected to the outputs S,M1,M2 of the NICAM decoder 150. The bases of the transistors TR2-TR4 are respectively connected to the first resistors R1 with the emitters connected to a bias B. The second resistors R2 are respectively connected between the bases and emitters of the transistors TR2-TR4.

The broadcast mode display means comprises a plurality of light emitting diode LED2-LED4 respectively connected to the collectors of the transistors TR2-TR4, and a plurality of resistors R5-R7 respectively connected between the cathodes of the light emitting diodes LED2-LED4.

The OR gate 170 comprises a plurality of diodes D1-D3 with the anodes respectively connected to the collectors of the transistors TR2-TR4, and a resistor RO connected between the cathodes of the diodes D1-D3 and ground.

The output selection means 120 comprises a first and second switches SW1 and SW2.

The PCM/FM mode display means comprises a resistor R1 connected to the selection output SO of the microcomputer 10, a transistor TR1 with the base and emitter respectively connected to the resistor R1 and bias B, a light emitting diode LED1 with the anode connected to the collector of the transistor TR1, and a further resistor R4 connected between the cathode of the light emitting diode LED1 and ground.

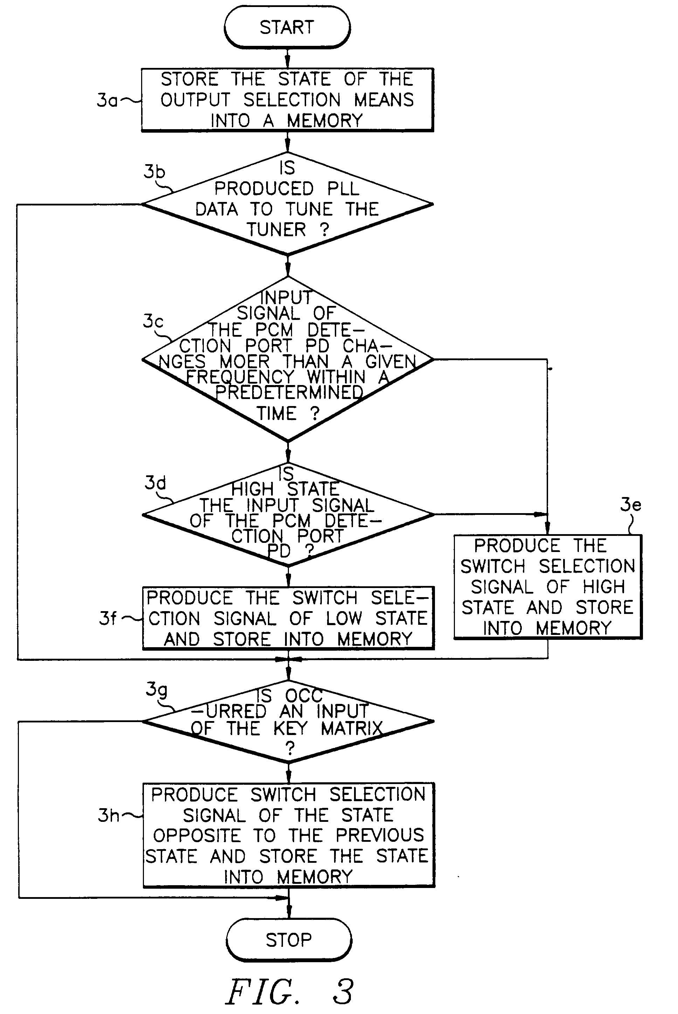

Hereinafter, the operation of the inventive apparatus will now be described specifically with reference to Figs. 2 and 3.

Receiving NICAM broadcast signals, the NICAM decoder 150 produces a signal of low state through at least one of the outputs S,M1,M2 according to the present mode of the NICAM broadcasting. Here, it is assumed the output S is stereo, M1 first mono, and M2 second mono. Thus at least one of the transistors TR2-TR4 is conducting. Accordingly light is emitted from one of the light emitting diodes LED2-LED4 connected to the transistors TR2-TR4. For example, if the light emitting diode LED2 is turned on, the present broadcasting mode is NICAM mode with stereo output.

The resistors R1-R2 connected to the transistors TR2-TR4 are used for the bias. The transistors TR2-TR4 are PNP type because the NICAM decoder 150 normally produces the signal of low state in operation. Accordingly if the NICAM decoder 150 normally produces the signal of high state in operation, the transistors should be NPN type.

The OR gate 170 connected to the collectors of the transistors TR2-TR4 outputs the high signal if receiving the NICAM broadcasting, or otherwise the low signal. The OR gate 170 has three inputs consisting of three diodes D1-D3. The output of the OR gate 170 is applied to the input PD of the microcomputer 10 that is called PCM detection port in the present invention.

The microcomputer 10 generates through the output SO a control signal for automatically switching the output selection means 120 to the PCM or FM receiving mode, together with a control signal for controlling the output selection means 120 in response to the user's selection signal produced by the key matrix 11. Thus the PCM/FM mode selection of the receiver is not only automatically achieved, but also manually as desired. If the microcomputer 10 receives the high signal through the input PD, thus producing the low signal through the output SO, the first and second switches SW1-SW2 of the output selection means 120 contact the terminals (b) to obtain the PCM output. Namely, if the microcomputer 10 receives the NICAM broadcasting, it switches firstly the output selection means to the PCM mode.

Alternatively, if the OR gate 170 outputs the low signal, the microcomputer 10 produces the high signal through the output SO so as to cause the first and second switches SW1-SW2 to contact the terminals (a), thus outputting the FM audio signals. In addition, the microcomputer 10 generates a control signal for controlling the output selection means 120 through the output SO in response to the signal from the key matrix 11.

If the microcomputer 10 generates the low signal through the output SO, the NICAM broadcasting is received, and the transistor TR1 of the broadcast mode display means is turned on so as to light the light emitting diode LED1. Thus the user notices the NICAM broadcasting being received.

Referring to Fig. 3, the flow of the inventive method will be analyzed. The state of the output selection means 120 is stored into a memory not shown, in the step 3a. It is checked whether the PLL data is produced to tune the tuner, in the step 3b. The steps 3a to 3b correspond to the first step of the inventive method.

In the step 3c, in order to determine the quality of the broadcasting it is checked whether the input signal of the PCM detection port PD changes more than a given frequency within a predetermined time. If the input signal changes more than a given frequency, the switch selection signal of high state is produced so as to receive the FM audio signal, which state is stored into the memory, in the step 3e.

If the input signal of the PCM detection port PD does not change more than a given frequency in the step 3c, it is checked in the step 3d whether the input signal of the PCM detection port PD is high or no. Then, if the input signal of the PCM detection port PD is low, the flow proceeds to the step 3e, or otherwise the microcomputer 10 generates the switch selection signal of low state through the output SO so as to receive the NICAM broadcasting, which state is stored into the memory. In this case, the light emitting diode LED1 is turned on.

The steps 3c to 3e correspond to the second step of the inventive method, and the steps 3d-3f to the third step thereof.

Thereafter, if there occurs an input of the key matrix in the step 3g, the switch selection signal of the state opposite to the previous state is produced in the step 3h, which state is stored into the memory. Then the flow is ended.

Meanwhile, if there does not occur an input of the key matrix in the step 3g, the flow is immediately ended. The steps 3g to 3h correspond to the fourth step of the inventive method.

Thus the inventive apparatus makes it possible to properly receive the PCM/FM audio signals, and to visually catch the state of the present broadcasting.

As stated above, the receiver of the NICAM broadcasting according to the present invention is automatically switched to PCM or FM mode according to the state of the broadcasting, thus properly receiving the broadcasting.

## Claims

1. An apparatus for selecting the pulse code modulation or frequency modulation mode (PCM/FM mode) of a receiver of the broadcast signals of a near instantaneously commanded audio multiplexer (NICAM) comprising:
a drive means (TR2-TR4) for driving said apparatus according to the broadcast mode signals produced from a NICAM decoder (150);
a broadcast mode display means (LED2-LED4) for displaying the receiving of said NICAM broadcast signals through said drive means;
an OR gate (170) connected to said drive means (TR2-TR4) for providing a logic signal;
an output selection means (120) for switching said receiver to the PCM or FM mode;
a microcomputer (10) for generating control signals to automatically control said output selection means (120) to the PCM or FM mode in response to the output of said OR gate (170), and to manually control said output selection means in response to the signals of a key matrix (11); and
a PCM/FM mode display means (LED1) for displaying the receiving mode of said receiver in response to the control signals of said microcomputer (10);
wherein said drive means comprises:
a plurality of first resistors (R1) respectively connected to the outputs (S,M1,M2) of said NICAM decoder (150);
a plurality of transistors (TR2-TR4) with the bases respectively connected to said first resistors (R1) and the emitters connected to a bias (B); and
a plurality of second resistors (R2) each connected between the base and emitter of the respective one of said transistors (TR2-TR4); and
wherein
said PCM/FM mode display means comprises:
a resistor (R1) connected to the selection output (SO) of said microcomputer (10);
a transistor (TR1) with the base and emitter respectively connected to said resistor (R1) and bias (B);
a light emitting diode (LED1) with the anode connected to the collector of said transistor (TR1); and
a further resistor (R4) connected between the cathode of said light emitting diode (LED1) and ground.

## Patentansprüche

1. Vorrichtung zur Auswahl der Pulscodemodulation oder Frequenzmodulation (PCM/FM) eines Empfängers von Audiosignalen mit einem NICAM (Near Instantaneously Companded Audio Multiplexer)-Dekoder mit:
einer Treibereinrichtung (TR2-TR4) zum Treiben der Vorrichtung nach Maßgabe der von dem NICAM-Dekoder (150) erzeugten Audio-Betriebsweisen-Signale;
einer Audio-Betriebsweise-Anzeigeeinrichtung (LED2-LED4) zum Anzeigen des Empfangs der NICAM-Audiosignale durch die Treibereinrichtung;
einem mit der Treibereinrichtung (TR2-TR4) verbundenen ODER-Glied (170) zum Erzeugen eines logischen Signals;
einer Ausgangs-Wahleinrichtung (120) zum Schalten des Empfängers auf die PCM- oder FM-Betriebsweise;
einem Mikrocomputer (10) zum Erzeugen von Steuersignalen zur automatischen Steuerung der Ausgangs-Wahleinrichtung (120) für die PCM- oder FM-Betriebsweise im Ansprechen auf das Ausgangssignal des ODER-Glieds (170) sowie zum manuellen Steuern der Ausgangs-Wahleinrichtung im Ansprechen auf die Signale einer Tastenmatrix (11); und
einer PCM/FM-Betriebsweisen-Anzeigeeinrichtung (LED1) zum Anzeigen der Empfangs-Arbeitsweise des Empfängers im Ansprechen auf die Steuersignale von dem Mikrocomputer (10); wobei die Treibereinrichtung aufweist:
eine Vielzahl von ersten Widerständen (R1), die jeweils mit den Ausgängen (S, M1, M2) des NICAM-Dekoders (150) verbunden sind;
eine Vielzahl von Transistoren (TR2-TR4), deren Basen jeweils mit den ersten Widerständen (R1) und deren Emitter mit einer Vorspannung (B) verbunden sind; und wobei die PCM/FM-Betriebsweisen-Anzeigeeinrichtung aufweist:
einen mit dem Wahlausgang (SO) des Mikrocomputers (10) verbundenen Widerstand (R1);
einen Transistor (T1), dessen Basis mit dem Widerstand (R1) und dessen Emitter mit der Vorspannung (B) jeweils verbunden sind;
eine lichtemittierende Diode (LED1), deren Anode mit dem Kollektor des Transistors (TR1) verbunden ist; und
einen weiteren Widerstand (R4), der zwischen die Kathode der lichtemittierenden Diode (LED1) und Erde geschaltet ist.

## Revendications

1. Appareil pour sélectionner un mode de modulation par impulsions codées ou de modulation de fréquence (mode PCM/FM) d'un récepteur de signaux radiodiffusés d'un multiplexeur basse fréquence commandé presque simultanément, comprenant :
un moyen d'attaque (TR2-TR4) pour attaquer ledit appareil en fonction des signaux de mode de radiodiffusion produits à partir d'un décodeur NICAM (150) ;
un moyen d'affichage de mode de radiodiffusion (LED2-LED4) pour afficher la réception desdits signaux radiodiffusés d'un NICAM grâce audit moyen d'attaque ;
une porte OU (170) connectée audit moyen d'attaque (TR2-TR4) pour délivrer un signal logique ;
un moyen de sélection de signal de sortie (120) pour commuter ledit récepteur sur le mode PCM ou FM ;
un micro-ordinateur (10) pour générer des signaux de commande pour commander automatiquement ledit moyen de sélection de signal de sortie (120) sur le mode PCM ou FM en réponse au signal de sortie de ladite porte OU (170), et pour commander manuellement ledit moyen de sélection de signal de sortie en réponse au signaux d'un clavier à matrice (11) ; et
un moyen d'affichage de mode PCM/FM (LED1) pour afficher le mode de réception dudit récepteur en réponse aux signaux de commande dudit micro-ordinateur (10) ;
dans lequel ledit moyen d'attaque comprend :
une pluralité de premières résistances (R1) respectivement connectées aux sorties (S, M1, M2) dudit décodeur NICAM (150) ;
une pluralité de transistors (TR2-TR4) ayant les bases respectivement connectées auxdites premières résistances (R1) et les émetteurs connectés à une source de polarisation (B) ; et
une pluralité de secondes résistances (R2) chacune connectée entre la base et l'émetteur du respectif desdits transistors (TR2-TR4) ; et
dans lequel ledit moyen d'affichage de mode PCM/FM comprend :
une résistance (R1) connectée à la sortie de sélection (SO) dudit micro-ordinateur (10) ;
un transistor (TR1) ayant la base et l'émetteur respectivement connectés à ladite résistance (R1) et à ladite source de polarisation (B) ;
une diode électroluminescente (LED1) ayant l'anode connectée au collecteur dudit transistor (TR1) ; et
une résistance supplémentaire (R4) connectée entre la cathode de ladite diode électroluminescente (LED1) et la masse.
